# EUROPEAN PATENT APPLICATION

(11) **EP 4 718 239 A1**
(43) Date of publication of application: **01.04.2026**
(21) Application number: 25204563.8
(22) Date of filing: 25.09.2025
(51) Int. Cl.: G06F 8/65

(54) **CONTROL SYSTEM WITH ABILITY TO MAINTAIN SAFETY FUNCTIONALITY DURING UPDATE**

(30) Priority: 27.09.2024 US 202463699995 P; 11.09.2025 US 202519326028
(71) Applicant: Rockwell Automation Technologies, Inc., Mayfield Heights, OH 44124 (US)
(72) Inventor: Chetry, Roshan, Mayfield Heights, OH, 44124 (US); Orlowski, Erik T., Mayfield Heights, OH, 44124 (US); Hangala Mahadevappa, Gaviswamy, Mayfield Heights, OH, 44124 (US); Stay, Nicholas L., Mayfield Heights, OH, 44124 (US)
(74) Representative: Grünecker Patent- und Rechtsanwälte PartG mbB

(57) **Abstract**

Systems, methods, and media for implementing updates in a control system without losing safety functionality. An example method includes halting execution of a safety function on a secondary control device; updating the secondary control device while the execution of the safety function is halted on the secondary control device; synchronizing second safety data associated with the safety function and stored in memory of the secondary control device with first safety data associated with the safety function and stored in memory of a primary control device after updating the secondary control device; and restarting the execution of the safety function on the secondary control device after synchronizing the second safety data with the first safety data.

## Description

### CROSS-REFERENCE TO RELATED APPLICATION

This application claims the benefit of and priority to U.S. Provisional Patent Application No. 63/699,995 filed September 27, 2024, the entirety of which is incorporated by reference herein.

### BACKGROUND INFORMATION

Control systems can be used in manufacturing facilities in industries such as aerospace, automotive, cement, chemical processing, food and beverage, household and personal care, life sciences, marine operations, metals processing, mining operations, oil and gas, power generation, print and publishing, pulp and paper, semiconductors, warehouse and fulfillment, and wastewater treatment, for example. These control systems can include both safety and control functionality, and improvements in these control systems are generally desired.

### BRIEF DESCRIPTION

One aspect of the disclosure is a method for facilitating updates in a control system. The method includes executing a control function and a safety function associated with equipment in the control system concurrently on a primary control device and a secondary control device; halting execution of the control function and the safety function on the secondary control device; updating the secondary control device while the execution of the control function and the safety function is halted on the secondary control device; synchronizing second safety data that is associated with the safety function and stored in memory of the secondary control device with first safety data that is associated with the safety function and stored in memory of the primary control device after updating the secondary control device; restarting the execution of the control function and the safety function on the secondary control device after synchronizing the second safety data with the first safety data; halting execution of the control function and the safety function on the primary control device after restarting the execution of the control function and the safety function on the secondary control device; updating the primary control device while the execution of the control function and the safety function is halted on the primary control device; synchronizing the first safety data with the second safety data after updating the primary control device; and restarting the execution of the control function and the safety function on the primary control device after synchronizing the first safety data with the second safety data.

Another aspect of the disclosure is a control system. The control system includes memory storing machine-readable instructions and processing circuitry to execute the machine-readable instructions to execute a safety function associated with equipment in the control system concurrently on a primary control device and a secondary control device; halt execution of the safety function on the secondary control device; update the secondary control device while the execution of the safety function is halted on the secondary control device; synchronize second safety data that is associated with the safety function and stored in memory of the secondary control device with first safety data that is associated with the safety function and stored in memory of the primary control device after updating the secondary control device; restart the execution of the safety function on the secondary control device after synchronizing the second safety data with the first safety data; halt execution of the safety function on the primary control device after restarting the execution of the safety function on the secondary control device; update the primary control device while the execution of the safety function is halted on the primary control device; synchronize the first safety data with the second safety data after updating the primary control device; and restart the execution of the safety function on the primary control device after synchronizing the first safety data with the second safety data.

Yet another aspect of the disclosure is one or more non-transitory computer-readable storage media having instructions stored thereon that, when executed by processing circuitry, cause the processing circuitry to execute the machine-readable instructions to execute a safety function associated with equipment in the control system concurrently on a primary control device and a secondary control device; halt execution of the safety function on the secondary control device; update the secondary control device while the execution of the safety function is halted on the secondary control device; synchronize second safety data that is associated with the safety function and stored in memory of the secondary control device with first safety data that is associated with the safety function and stored in memory of the primary control device after updating the secondary control device; restart the execution of the safety function on the secondary control device after synchronizing the second safety data with the first safety data; halt execution of the safety function on the primary control device after restarting the execution of the safety function on the secondary control device; update the primary control device while the execution of the safety function is halted on the primary control device; synchronize the first safety data with the second safety data after updating the primary control device; and restart the execution of the safety function on the primary control device after synchronizing the first safety data with the second safety data.

### BRIEF DESCRIPTION OF THE DRAWINGS

FIG. 1 is a block diagram illustrating components of an example control system, in accordance with some aspects of the disclosure.
FIG. 2 is a diagram illustrating different memory layouts associated with a primary control device and secondary control device in the control system of FIG. 1, in accordance with some aspects of the disclosure.
FIG. 3 is a flow diagram illustrating an example process for implementing an update within the control system of FIG. 1, in accordance with some aspects of the disclosure.
FIG. 4 is a flow diagram illustrating another example process for implementing an update within the control system of FIG. 1, in accordance with some aspects of the disclosure.
FIG. 5 is a flow diagram illustrating yet another example process for implementing an update within the control system of FIG. 1, in accordance with some aspects of the disclosure.

### DETAILED DESCRIPTION

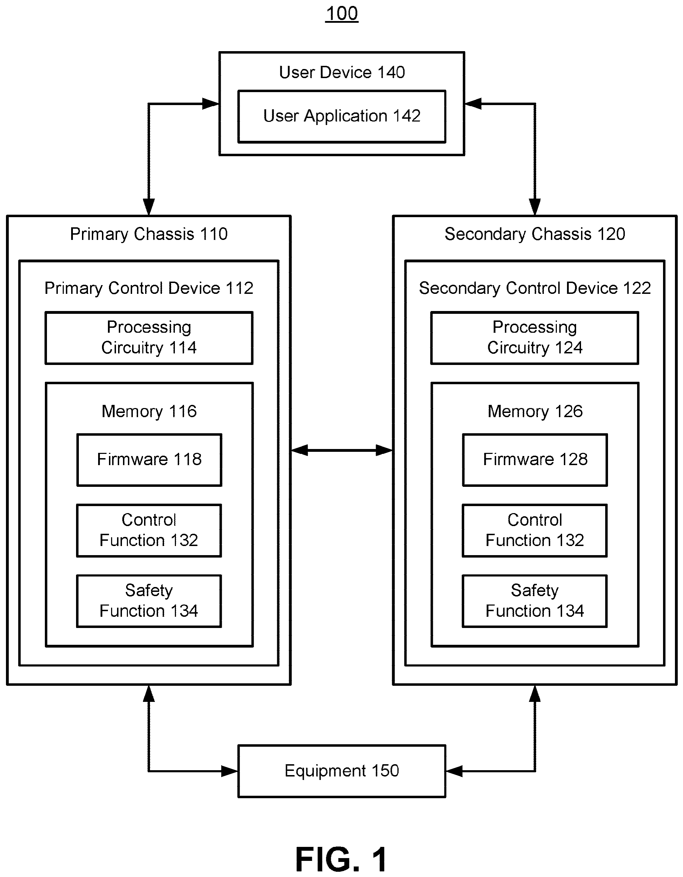

Referring to FIG. 1, a block diagram illustrating components of an example control system 100 is shown, in accordance with some aspects of the disclosure. The control system 100 can generally be used to control the operation of various types of equipment in various types of industrial facilities. For example, the control system 100 can be implemented in manufacturing facilities in industries such as aerospace, automotive, cement, chemical processing, food and beverage, household and personal care, life sciences, marine operations, metals processing, mining operations, oil and gas, power generation, print and publishing, pulp and paper, semiconductors, warehouse and fulfillment, and wastewater treatment, among others. As shown in FIG. 1, the control system 100 can include a primary chassis 110, a secondary chassis 120, a user device 140 that stores a user application 142, and equipment 150. The primary chassis can include a primary control device 112, and the primary control device 112 can include processing circuitry 114 and memory 116, where the memory 116 can store firmware 118, a control function 132, and a safety function 134. The secondary chassis can similarly include a secondary control device 122, and the secondary control device 122 can include processing circuitry 124 and memory 126, where the memory 126 can store firmware 128, the control function 132, and the safety function 134.

The components of the control system 100 including the primary chassis 110, the primary control device 112, the secondary chassis 120, the secondary control device 122, the user device 140, and the equipment 150 can be in electrical communication with each other either directly or indirectly using various types and combinations of communications networks, protocols, and networking equipment. For example, the components of the control system 100 can communicate with each other using various types of wired and/or wireless communications including Ethernet Industrial Protocol (Ethernet/IP) communications, Common Industrial Protocol (CIP) safety communications, Profibus communications, Modbus communications, serial communications, Wi-Fi communications, internet communications, and/or other suitable communications protocols. For example, various components of the control system 100 can communicate via one or more local area networks (LAN) in a manufacturing facility.

The primary chassis 110 and the secondary chassis 120 can be implemented using various suitable types of chassis and can include various suitable types of devices (modules). For example, the primary chassis 110 and the secondary chassis 120 can each be implemented as a modular housing that includes a mechanical enclosure (e.g., that can be mounted in an electrical cabinet, on a rack, etc.) and a backplane or other type of bus system that provides power distribution and a communication pathway between devices. The primary chassis 110 and the secondary chassis 120 can each include devices such as a power supply, one or more control devices (e.g., the primary control device 112, the secondary control device 122, etc.), one or more communication modules (e.g., for Ethernet/IP, CIP, etc.) and/or one or more input/output (I/O) modules (e.g., digital I/O, analog I/O, safety I/O, etc.), for example. Also, it should be noted that the primary control device 112 and the secondary control device 122 do not necessarily need to be implemented in separate chassis, or in chassis at all, but can instead be implemented within the same chassis or separately from any chassis altogether.

The primary control device 112 and the secondary control device 122 can each be implemented in various possible manners depending on the application. For example, the primary control device 112 and/or the secondary control device 122 can include multiple separate devices (modules) that are provided within the primary chassis 110 and/or the secondary chassis 120, respectively, such that the primary control device 112 and/or the secondary control device 122 are implemented as a programmable logic controller (PLC) system. The primary control device 112 and/or the secondary control device 122 can also be implemented as a compact PLC with various functionality (e.g., processing, I/O, etc.) integrated into a single standalone device. The primary control device 112 and/or the secondary control device 122 can also be implemented as a modular PLC, a programmable automation controller (PAC), a distributed control system (DCS) controller, a single-loop controller, a multi-loop controller, an industrial personal computer (IPC), a dedicated safety controller (e.g., a safety PLC), or an embedded controller/microcontroller, for example, among other possible implementations of the primary control device 112 and the secondary control device 122.

The processing circuitry 114 of the primary control device 112 and the processing circuitry 124 of the secondary control device 122 can also be implemented in various possible manners depending on the application. For example, the processing circuitry 114 and/or the processing circuitry 124 can be contained within a single device or system, or can be spread across multiple devices or systems. The processing circuitry 114 and the processing circuitry 124 can include one or more central processing units (CPUs), one or more graphics processing units (GPUs), and/or other types of hardware processing circuitry. The processing circuitry 114 and the processing circuitry 124 can be implemented using any number of processing cores, including single core processors, dual core processors, and other processor core configurations.

The memory 116 of the primary control device 112 and the memory 126 of the secondary control device 122 can also be implemented in various possible manners depending on the application. Again, the memory 116 and the memory 126 can be contained within a single device or system, or can be spread across multiple devices or systems. The memory 116 and the memory 126 can include any suitable types of memory including different types of volatile memory, non-volatile memory, random-access memory (RAM), read-only memory (ROM), electrically erasable programmable read-only memory (EEPROM), and/or other types of memory. The memory 116 and the memory 126 can include one or more non-transitory computer-readable storage media having instructions stored thereon that, when executed by the processing circuitry 114 and the processing circuitry 124, cause the processing circuitry 114 and the processing circuitry 124 to perform operations in accordance with the instructions.

The firmware 118 and the firmware 128 can also be implemented in various possible manners depending on the application. For example, the firmware 118 and/or the firmware 128 can include main controller firmware (e.g., CPU firmware associated with the primary control device 112 and/or the secondary control device 122, safety controller firmware, etc.), backplane or other chassis management firmware (e.g., firmware associated with the primary chassis 110 and/or the secondary chassis 120, etc.), I/O module firmware (e.g., for one or more I/O modules contained in the primary chassis 110 and/or the secondary chassis 120, etc.), communication module firmware (e.g., for one or more I/O modules contained in the primary chassis 110 and/or the secondary chassis 120, etc.), safety and/or redundancy firmware (e.g., for safety integrity level (SIL) 2 or SIL 3 operation, etc.), and/or other possible types of firmware. The firmware 118 and the firmware 128 can be updated within the control system 100 for various purposes.

The user device 140 can be implemented using various possible types of computing devices depending on the application. For example, the user device 140 can be implemented using a laptop computer, a desktop computer, a tablet, or a smartphone, among other possible types of computing devices. The user device 140 can also be implemented using a workstation computing device that is located in a manufacturing facility for use by engineers and other skilled personnel (e.g., a human machine interface (HMI) device, a workstation computer, an IPC, etc.). The user device 140 can include various suitable types of processing circuitry (e.g., one or more CPUs, one GPUs, etc.) and memory (e.g., volatile, non-volatile, RAM, ROM, EEPROM, etc.). The memory of the user device 140 can include one or more non-transitory computer-readable storage media having instructions stored thereon that, when executed by the processing circuitry of the user device 140, cause the processing circuitry of the user device 140 to perform operations in accordance with the instructions. For example, as shown in FIG. 1, the memory of the user device 140 can include a user application 142. The user application can include instructions that are executable by the processing circuitry of the user device 140 to cause the user device 140 to present one or more user interfaces (e.g., graphical user interfaces (GUIs), etc.) to a user of the user device 140, where the user interfaces allow the user to configure various parameters pertaining to the control function 132, the safety function 134, and/or other parameters generally associated with the control system 100.

The equipment 150 can be implemented using various suitable types of industrial automation equipment depending on the application. For example, the equipment 150 can include additional PLCs and/or other types of controllers, I/O devices, sensors, drives, motors, conveyors, lasers, filling machines, other types of general machinery, robots, actuators, relays, interlocks, communication and networking devices and components, supervisory and interface systems (e.g., HMI devices, engineering workstations, etc.), safety systems and components (e.g., emergency stop (e-stop) devices, guard doors, etc.), and/or any other possible types of equipment that may be used in an industrial automation environment. In general, the equipment 150 can be controlled by the primary control device 112 and/or the secondary control device 122 for process automation and safety functionality. For example, the primary control device 112 and/or the secondary control device 122 can send control signals to the equipment 150 (e.g., responsive to executing the control function 132 and/or the safety function 134, etc.) that cause the equipment 150 to operate in accordance with the control signals.

In some implementations, the primary control device 112 and the secondary control device 122 can operate together in accordance with a one out of two (1oo2) or a one out of two with diagnostics (1oo2d) safety architecture. However, in other implementations, the control system 100 can include additional components (e.g., additional chassis, additional control devices, etc.) such that the primary control device 112 and the secondary control device 122 can operate together in accordance with other types of safety architectures (e.g., two out of three (2oo3), etc.). Accordingly, the secondary control device 122 can serve as a redundant control device that works together with the primary control device 112 as part of a 1oo2 or a 1oo2d safety architecture. In FIG. 1, both the memory 116 and the memory 126 are shown to include the control function 132 and the safety function 134. The control function 132 can include any suitable types of machine-readable instructions that are executable by the primary control device 112 and the secondary control device 122 and are related to control of the equipment 150. The safety function 134 can likewise include any suitable types of machine-readable instructions that are executable by the primary control device 112 and the secondary control device 122 and related to providing safety functionality for the equipment 150. For example, the safety function 134 can be executed by the primary control device 112 and the secondary control device 122 to reduce risk by achieving or maintaining a safe state of the equipment 150 in response to various hazardous conditions.

In some existing control systems, if any type of update (e.g., firmware update, hardware update, safety function update, etc.) is desired for components of a safety control system like the control system 100, the update (upgrade) process may require the control functionality and/or the safety functionality provided by the safety control system to be shut down for a period of time. This shutdown period of time can be rather lengthy in some existing control systems, which can cause not only the extended loss of control over the safety functionality, but also a significant loss of production (e.g., of a product produced at the associated manufacturing facility). The shutdown period of time can also cause loss of raw materials that are already in the process. Accordingly, when using these existing control systems, facilities may be required to take down their entire manufacturing process just to implement simple updates (e.g., bug fixes, etc.) to components of the safety control system.

Additionally, when updating components of a safety control system like the control system 100, significant challenges may be faced in terms of adapting to changes in memory layouts that can result from updates. For example, if the firmware of a control device is updated, or if the control device is updated entirely to a newer type of control device, the associated memory layouts can change. In a redundant safety control system (e.g., a 1oo2 or a 1oo2d system, etc.), updates can often create scenarios where the secondary (redundant) control device can store various types of safety data in different memory locations relative to the primary control device. This difference in memory layouts between primary and secondary can result from updated firmware and/or the allocation and deletion of safety memory through edits that can happen during the life cycle of the safety function. As a result, complexity can be created in terms of bringing up the secondary device to initiate running the safety function and take over as the new primary and in terms of maintaining concurrent execution of the safety function during the update process because the secondary device must account for the difference in memory layouts and remap the associated safety data within the realm of the execution of the safety function.

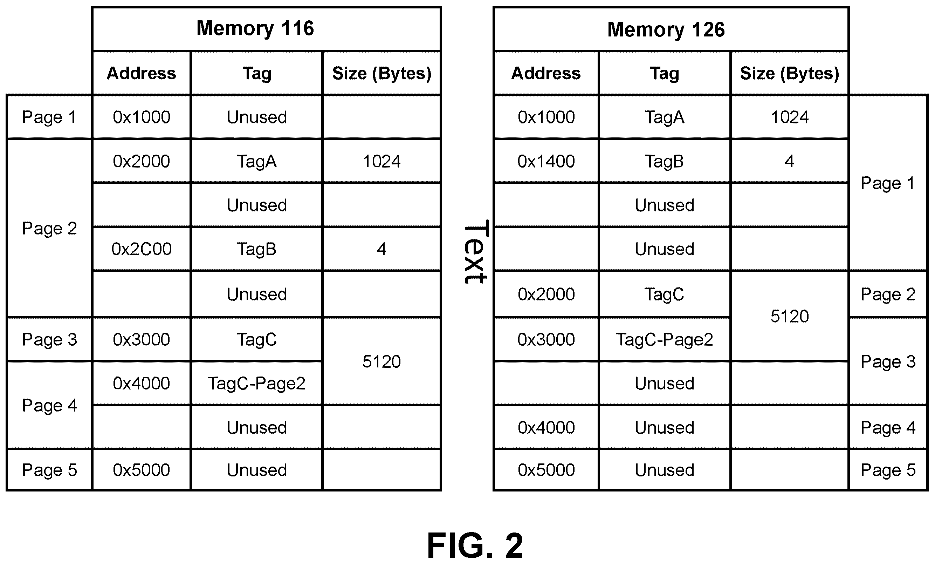

Referring to FIG. 2, a diagram illustrating different memory layouts associated with the primary control device 110 and the secondary control device in the control system of FIG. 1 is shown, in accordance with some aspects of the disclosure. The diagram of FIG. 2 illustrates the differing memory layout scenario described above when applied to the control system 100. As shown, the layout of the memory 116 of the primary control device 112 differs from the layout of the memory 126 of the secondary control device 122. The difference in memory layouts between the memory 116 and the memory 126 can arise due to a variety of potential reasons (e.g., firmware updates, hardware updates, hardware differences, changes to the safety function 134 made via the user application 142 on the user device 140, etc.). As shown in FIG. 2, for example, TagA that is used by the safety function 134 can be stored at the address 0x2000 in the memory 116, but then at the address 0x1000 in the memory 126. Similarly, TagB that is used by the safety function 134 can be stored at the address 0x2C00 in the memory 116, but then at the address 0x1400 in the memory 126. As detailed below, the control system 100 can include functionality that allows for more efficient update processes by accounting for differing memory layouts that may exist between the memory 116 and the memory 126 through dynamic re-mapping.

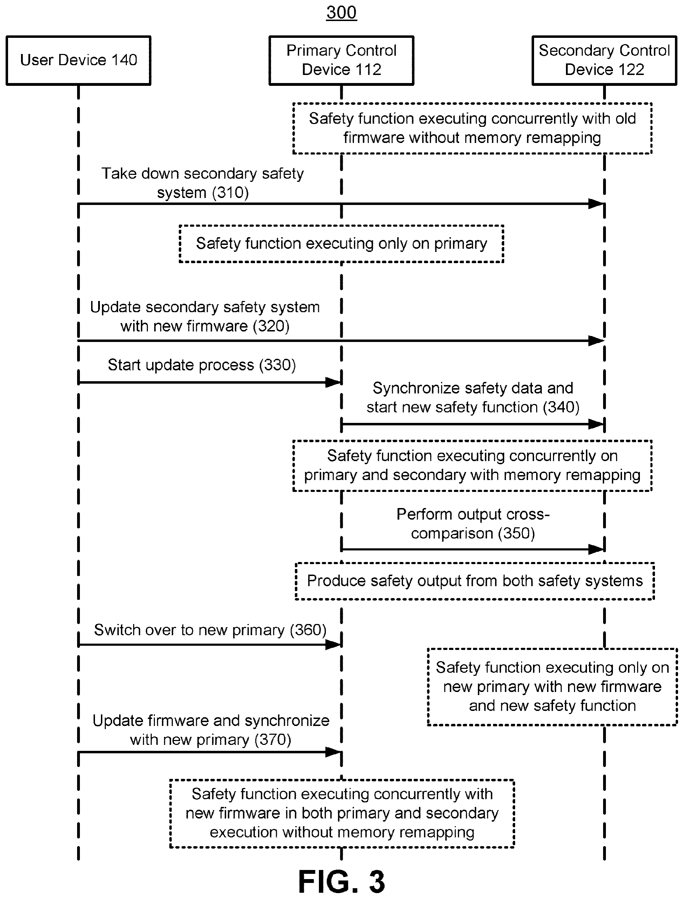

Referring to FIG. 3, a flow diagram illustrating an example process 300 for implementing an update within the control system 100 is shown, in accordance with some aspects of the disclosure. The process 300 can generally be performed by the control system 100 and involves updating the firmware 118, the firmware 128, and the safety function 134. For example, the process 300 can be performed at least in part by the primary control device 112 and the secondary control device 122. Before initiating the process 300, a user may determine that the firmware 118 and the firmware 128 are outdated and require updating, and that the safety function 134 should be changed (e.g., by interacting with the user application 142 on the user device 140) for various suitable reasons. The process 300 can provide improved efficiency as compared to some previous update processes for safety control systems by allowing the updates to the firmware 118, the firmware 128, and the safety function 134 without requiring the same levels of downtime.

Before beginning the process 300, the primary control device 112 and the secondary control device 122 can be concurrently executing the safety function 134. Then, at 310, the process 300 can include receiving, by the secondary control device 122, an instruction from the user device 140 to take down the secondary safety system. In response to receiving the instruction from the user device 140 at 310, the secondary control device 122 can stop executing the safety function 134. As a result, after 310, the safety function 134 may only be executing on the primary control device 112. Then, at 320, the process 300 can include updating the secondary control device 122 with a new version of the firmware 128. The update that occurs at 320 can be initiated via the user device 140 (e.g., by interacting with the user application 142 on the user device 140). Then, at 330, the process 300 can include initiating the update process for the primary control device 112. The updated process for the primary control device 112 can be initiated at 330 by the user device 140 (e.g., again, by interacting with the user application 142 on the user device 140).

Then, at 340, the process 300 can include synchronizing safety data between the primary control device 112 and the secondary control device 122 and starting execution of the new version of the safety function 134 by the secondary control device 122. After 340, the secondary control device 122 can be executing the new version of the safety function 134 while the primary control device 112 executes the older version of the safety function 134. At 340, the synchronization of the safety data between the primary control device 112 and the secondary control device 122 can be performed using dynamic memory re-mapping to account for differing memory layouts between the memory 116 and the memory 126. For example, the processing circuitry 124 can perform re-mapping of the memory 126 upon execution of the new version of the safety function 134 by detecting that the physical layout of the memory 126 has changed (e.g., as a result of updating to the new version of the firmware 128), updating one or more logical-to-physical memory address mapping tables, validating any updated memory address mapping tables (e.g., using built-in tests, redundant cross checks, etc.), and synchronizing with the primary control device 112 (e.g., by comparing an updated image of the memory 126 to an expected memory model associated with the memory 116, etc.).

Then, at 350, the process 300 can include performing an output cross-comparison between the secondary control device 122 and the primary control device 112. For example, the processing circuitry 114 can execute the older version of the safety function 134 to generate a first output, and the processing circuitry 124 can execute the new version of the safety function 134 based on the same inputs to generate a second output. Then, if these safety outputs generated by both of the safety systems match, the process 300 can continue to 360. However, if these safety outputs generated by both of the safety systems do not match, the process 300 can return to 340, where the synchronization of the safety data between the primary control device 112 and the secondary control device 122 can be performed again and/or reevaluated. At 360, the process 300 can include switching the control system 100 over such that the secondary control device 122 operates as the new primary control device.

As a result of 360, the process 300 can continue with taking down the primary control device 112 to allow the update to the new version of the version of the firmware 118 and the new version of the safety function 134 on the primary control device 112 without losing control and safety functionality for the equipment 150. After 360, the new version of the safety function 134 and the new version of the firmware 128 can be executing on the secondary control device 122 (which is serving as the new primary control device). Then, at 370, the process 300 can include updating the primary control device 112 with the new version of the firmware 118 and with the new version of the safety function 134. The update that occurs at 370 can again be initiated via the user device 140 (e.g., by interacting with the user application 142 on the user device 140). After 370, the primary control device 112 and the secondary control device 122 can be concurrently executing the new version of the safety function 134, as well as the new versions of the firmware 118 and the firmware 128, respectively.

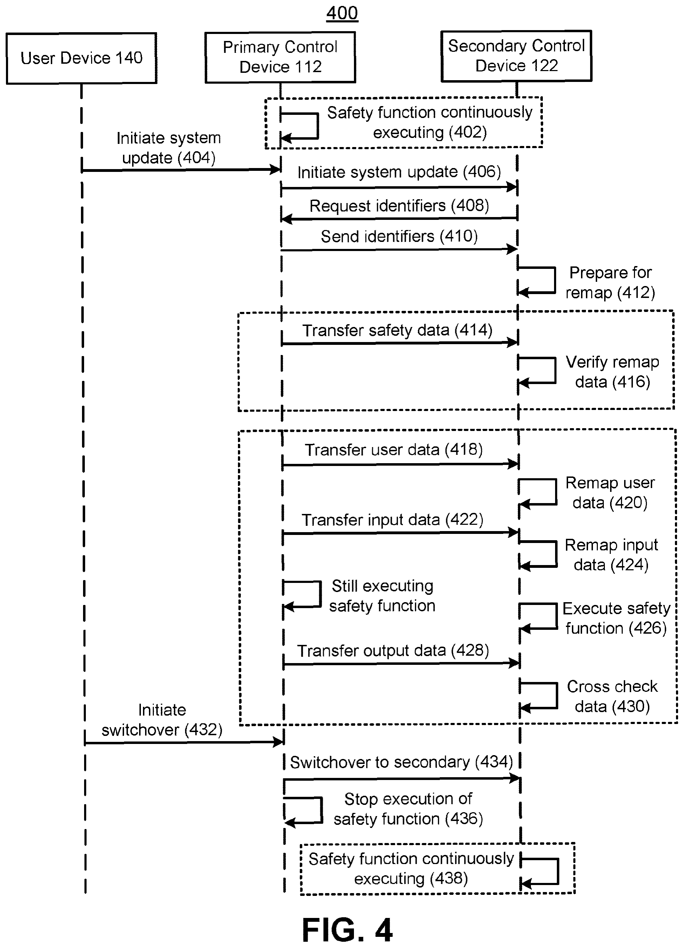

Referring to FIG. 4, a flow diagram illustrating another example process 400 for implementing an update within the control system 100 is shown, in accordance with some aspects of the disclosure. The process 400 can generally be performed by the control system 100 and is generally similar to the process 300. However, the process 400 illustrates some additional details around the synchronization between the primary control device 112 and the secondary control device 122 that can take place during the update process when compared to the process 300. Also, the process 400 only involves updating the firmware 118 and the firmware 128 on the primary control device 112 and the secondary control device 122, respectively. Again, the process 400 can provide improved efficiency as compared to some previous update processes for safety control systems by allowing the updates to the firmware 118 and the firmware 128 without requiring significant levels of downtime.

At 402, the process 400 can include continuous execution of the safety function 134 by the primary control device 112 only (e.g., single channel execution). That is, at 402, the secondary control device 122 has already been taken down (e.g., caused to stop executing the safety function 134). Then, at 404, the process 400 can include initiating a system update based on an instruction received from the user device 140 by the primary control device 112. At 406, the process 400 can then include sending an instruction to initiate the system update from the primary control device 112 to the secondary control device 122. For example, the primary control device 112 can receive a new version of the firmware 128 from the user device 140 at 404, and then send the new version of the firmware 128 to the secondary control device 122 at 406 such that the secondary control device 122 can store and activate the new version of the firmware 128. At 408, the process 400 can include requesting, by the secondary control device 122 from the primary control device 112, identifiers for use in the update process. Then, at 410, the process 400 can include sending, by the primary control device 112 to the secondary control device 122, the identifiers that were requested by the secondary control device 122 at 408. At 412, the process 400 can include preparing, by the secondary control device 122, for re-mapping of the memory 126 as part of the update process based on the identifiers received from the primary control device 112.

The identifiers exchanged between the primary control device 112 to the secondary control device 122 as part of the process 400 can be implemented using a variety of suitable types of identifiers that may be helpful in facilitating the update process for the control system 100 and the associated memory re-mapping functionality. The identifiers can provide a way to uniquely identify safety data elements and safety data structures that are exchanged between the primary control device 112 and the secondary control device 122 during the update process. The identifiers can be derived at least partially from CIP object instance numbers as used in the safety function 134, for example. These CIP object instance numbers may be guaranteed to be unique between different versions of firmware and unique from custom defined (e.g., via the user application 142) identifiers based on certain attributes of the CIP objects. These identifiers that are at least partially from CIP object instance numbers can be used to check for exact matches during the update process to maintain integrity.

At 414, the process 400 can include transferring safety data (e.g., user execution safety data, etc.) from the primary control device 112 to the secondary control device 122 with integrity. Then, at 416, the process can include verifying, by the secondary control device 122, the re-mapping data and preparing, by the secondary control device 122, for concurrent execution of the safety function 134 with the primary control device 112. Both 414 and 416 can occur at a point during the process 400 where the execution of the safety function 134 by the secondary control device 122 is halted (e.g., muted, paused). Then, after 416, the secondary control device 122 can begin executing the safety function 134 concurrently with the primary control device 112. This concurrent execution of the safety function 134 by the primary control device 112 and the secondary control device 122 can continue in a loop until the process 400 advances to 432.

At 418, the process 400 can include transferring user data from the primary control device 112 to the secondary control device 122. For example, the user data transferred at 418 can include user execution data that includes various intermediate safety variables and program states that are generated as a result of execution of the safety function 134, among other possible types of user data. At 420, the process 400 can include re-mapping, by the secondary control device 122, the memory 126 based on the user data received at 418. For example, the secondary control device 122 can update a memory address mapping table associated with the memory 126 based on the user data received at 418. Then, at 422, the process 400 can include transferring input data from the primary control device 112 to the secondary control device 122. For example, the input data transferred at 422 can define various types of input information associated with the control system 100 and the safety function 134. The input information can include digital inputs (e.g., e-stop status, guard door status, limit switch status, etc.), analog inputs (e.g., pressure, temperature, etc.), and/or other types of safety inputs (e.g., light curtain interrupted, laser scan triggered, etc.). At 424, the process 400 can include re-mapping, by the secondary control device 122, the memory 126 based on the input data received at 422. For example, the secondary control device 122 can update a memory address mapping table associated with the memory 126 based on the input data received at 422.

Then, at 426, the process 400 can include executing, by the secondary control device 122, the safety function 134 (with the new version of the firmware 128 installed and the memory 126 re-mapped accordingly). As a result of executing the safety function 134, the secondary control device 122 will generate output data that can be compared to output data from the primary control device 112 to ensure that the safety function 134 is executing properly on the secondary control device 122. At 428, the process 400 can include transferring output data from the primary control device 112 to the secondary control device 122. The output data transferred at 428 can include final control actions associated with the equipment 150 (e.g., de-energize motor contactor, issue safe torque off command to a motor drive, open shutdown valve, etc.) resulting from the execution of the safety function 134, for example. Then, at 430, the process 400 can include performing, by the secondary control device 122, a cross-comparison of the output data received at 428 to the output data generated by the secondary control device 122 as a result of executing the safety function 134. If the output data matches at 430, the process 400 can continue to 432. However, if these output data does not match at 430, the process 400 can continue in the loop and return to 418 to continue the synchronization process between the primary control device 112 and the secondary control device 122.

At 432, the process 400 can include initiating a switchover to the secondary control device 122 operating as the new primary control device. For example, the user device 140 can send an instruction (e.g., based on an interaction with the user application 142) to the primary control device 112 to initiate the switchover at 432. Then, at 434, the process 400 can include implementing the switchover to the secondary control device 122 operating as the new primary control device. For example, at 434, the primary control device 112 can send a single to the secondary control device 122 to implement the switchover. Then, at 436, the process 400 can include stopping execution of the safety function 134 on the primary control device 112. Finally, at 438, the process can include continuously executing the safety function 134 on the secondary control device 122 while the secondary control device 122 operating as the new primary control device within the control system 100 to allow for updating the firmware 118 on the primary control device 112 while still maintaining control and safety functionality for the control system 100 via the secondary control device 122.

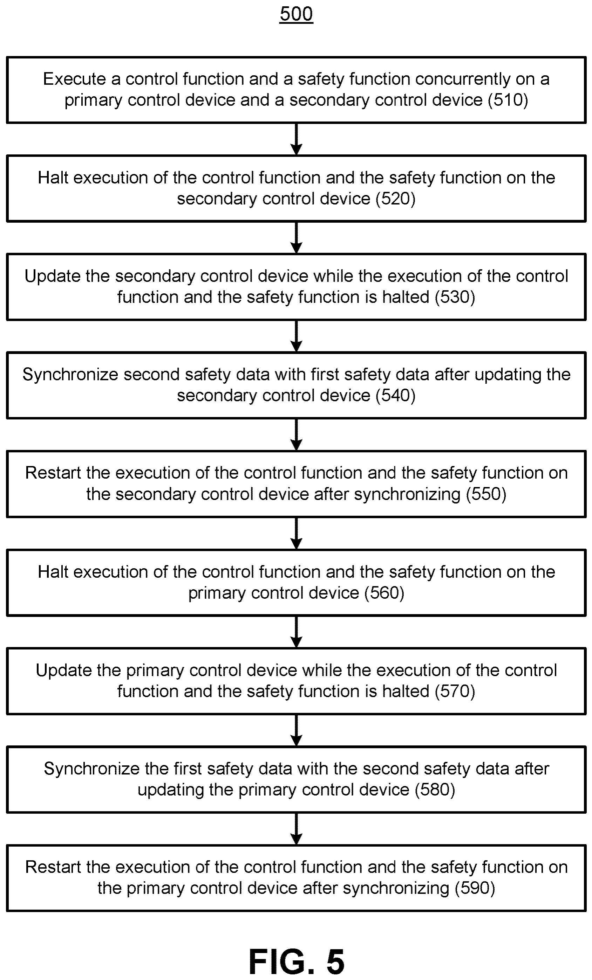

Referring to FIG. 5, a flow diagram illustrating yet another example process 500 for implementing an update within the control system 100 is shown, in accordance with some aspects of the disclosure. The process 500 can again generally be performed by the control system 100. For example, the process 500 can again be performed by the primary control device 112 and the secondary control device 122, in connection with the user device 140 and the equipment 150. The process 500 is similar in nature to the process 300 and the process 400. However, the process 500 provides a more generalized and holistic view of the update process that can be implemented in the control system 100 as described herein. In general, the process 500 can be used to solve the complex problem of updating a redundant safety system without having to lose safety and control functionality during the update process. The process 500 can allow manufacturing facilities to update control systems to use newer hardware, software, and/or firmware without having to lose control of safety functionality to do so and while maintaining high availability. As a result, by using components that implement the process 500, manufacturing facilities can avoid losses in production and raw materials, as well avoid incurring costly and resource-intensive system startup operations.

The process 500 can generally involve taking down a secondary safety system while allowing a primary system to maintain execution of a safety function. Also, the process 500 can involve updating the secondary system to one or more newer firmware revisions; migrating the user's project to the updated secondary system's version and downloading it to the secondary system; synchronizing the safety data in the secondary system with safety data from the primary system and initiating concurrent execution of the safety function using dynamic re-mapping of safety data; maintaining safety output cross-comparison between the primary and secondary safety systems until control is switched over from the primary system to the secondary system; switching control over to the secondary system to allow the primary system to be taken down while the secondary system with the newer firmware executes the safety function as the new primary system; upgrading the primary system with the one or more newer firmware revisions; and then resynchronizing the updated primary system with the secondary system (the new primary system) to achieve redundancy. The concurrent execution of the safety function within the process 500 can be achieved by exchanging and cross checking the safety function execution data at multiple checkpoints (e.g., safety input data exchange, safety user execution data exchange, safety output data exchange, etc.). Also, the concurrent execution of the safety function within the process 500 can be achieved during redundancy by allowing flexibility for differing memory layouts between the primary and secondary systems.

At 510, the process 500 can include executing a control function and a safety function concurrently on a primary control device and a secondary control device. For example, the primary control device 112 and the secondary control device 122 can continuously execute the control function 132 and the safety function 134 as discussed above during normal operation of the control system 100 before implementing an update. During normal operation, as noted above, the primary control device 112 and the secondary control device 122 can be configured to operate together in accordance with a 1oo2 or a 1oo2d safety architecture. Then, to begin implementing the update, at 520, the process 500 can include halting execution of the control function and the safety function on the secondary control device. For example, the execution of the control function 132 and the safety function 134 can be halted on the secondary control device 122. The execution of the control function 132 and the safety function 134 can be halted on the secondary control device 122 can be halted at 520 in various suitable manners. For example, a user can initiate the update via the user device 140 (e.g., by interacting with user interfaces presented by the user device 140 as a result of executing the user application 142) or the update can be initiated automatically by the control system 100 (e.g., responsive to detecting availability of new firmware, software, etc.).

At 530, the process 500 can include updating the secondary control device while the execution of the control function and the safety function is halted on the secondary control device. For example, the firmware 128 stored in the memory 126 of the secondary control device 122 can be updated at 530, the secondary control device 122 can be replaced with an updated secondary control device at 530, one or more components associated with the secondary control device 122 (e.g., the processing circuitry 124, the memory 126, other components of the secondary chassis 120, etc.) can be replaced with new components at 530, and/or additional components can be added to the secondary chassis 120 associated with the secondary control device 122 at 530, among other possible types of updates that can be implemented at 530. It should be noted that, depending on the type of update that occurs at 530, the process 500 does not necessarily include any human elements that may be involved. For example, in the event that the secondary control device 122 is replaced with an updated secondary control device at 530, the "updating" that occurs at 530 can simply involve detecting the updated secondary control device after the updated secondary control device gets installed in the secondary chassis 120 by a technician and establishing communications with the updated secondary control device.

At 540, the process 500 can include synchronizing second safety data that is associated with the safety function and stored in memory of the secondary control device with first safety data that is associated with the safety function and stored in memory of the primary control device after updating the secondary control device. For example, after updating the secondary control device 122 at 530, second safety data associated with the secondary control device 122 can be synchronized with first safety data that is associated with the primary control device 112 at 540. The first safety data and the second safety data can include various suitable types of safety data, such as those discussed above. For example, the first safety data and the second safety data can each include input data (e.g., digital inputs, analog inputs, other types of safety inputs, etc.), intermediate data (e.g., intermediate safety variables and safety states that are generated during the execution of the safety function 134, etc.), and output data (e.g., resulting safety control actions associated with the equipment 150, etc.).

The first safety data and the second safety data can be synchronized at 540 at least in part using unique identifiers that are exchanged between the primary control device 112 and the secondary control device 122 at 540. For example, the unique identifiers can be at least partially derived from CIP object instance numbers as used in the safety function 134. Additionally, the first safety data and the second safety data can be synchronized at 540 using re-mapping of the memory 126. For example, the re-mapping of the memory 126 at 540 can include updating one or more logical-to-physical memory address mapping tables, validating any updated memory address mapping tables (e.g., using built-in tests, redundant cross checks, etc.), and synchronizing with the primary control device 112 (e.g., by comparing an updated image of the memory 126 to an expected memory model associated with the memory 116, etc.).

At 550, the process 500 can include restarting the execution of the control function and the safety function on the secondary control device after synchronizing the second safety data with the first safety data. For example, after updating the secondary control device 122 at 530 and synchronizing the second safety data with the first safety data at 540, the execution of the control function 132 and the safety function 134 can be restarted on the secondary control device 122. The execution of the control function 132 and the safety function 134 on the secondary control device 122 can be restarted at 550 in various suitable manners. For example, a user can initiate the restart via the user device 140 (e.g., by interacting with user interfaces presented by the user device 140 as a result of executing the user application 142) or the restart can happen automatically after the control system 100 determines that the second safety data and the first safety data are appropriately synchronized. After 550, the control function 132 and the safety function 134 can be executing concurrently on the primary control device 112 and the secondary control device 122. After 550 and before proceeding to 560, the process 500 can also include performing at least one cross-comparison by comparing a second output generated by the secondary control device 122 as a result of executing the safety function 134 to a first output generated by the primary control device 112 as a result of executing the safety function 134 after restarting execution of the safety function 134 on the secondary control device 122. Also, after 550 and before proceeding to 560, the process 500 can also include causing the secondary control device 122 to operate as a new primary control device within the safety architecture of the control system 100.

Then, to continue implementing the update on the primary safety system, at 560, the process 500 can include halting execution of the control function and the safety function on the primary control device after restarting the execution of the control function and the safety function on the secondary control device. For example, the execution of the control function 132 and the safety function 134 can be halted on the primary control device 112. The execution of the control function 132 and the safety function 134 can be halted on the primary control device 112 at 560 in various suitable manners. For example, a user can initiate the update via the user device 140 (e.g., by interacting with user interfaces presented by the user device 140 as a result of executing the user application 142) or the halting can happen automatically after the control system 100 determines that the execution of the control function 132 and the safety function 134 has been appropriately restarted on the secondary control device 122.

At 570, the process 500 can include updating the primary control device while the execution of the control function and the safety function is halted on the primary control device. For example, the firmware 118 stored in the memory 116 of the primary control device 112 can be updated at 570, the primary control device 112 can be replaced with an updated primary control device at 570, one or more components associated with the primary control device 112 (e.g., the processing circuitry 114, the memory 116, other components of the primary chassis 110, etc.) can be replaced with new components at 570, and/or additional components can be added to the primary chassis 110 associated with the primary control device 112 at 570, among other possible types of updates that can be implemented at 570. It should be noted that, depending on the type of update that occurs at 570, the process 500 does not necessarily include any human elements that may be involved. For example, in the event that the primary control device 112 is be replaced with an updated primary control device at 530, the "updating" that occurs at 570 can simply involve detecting the updated primary control device after the updated primary control device gets installed in the primary chassis 110 by a technician and establishing communications with the updated primary control device.

At 580, the process 500 can include synchronizing the first safety data with the second safety data after updating the primary control device. For example, after updating the primary control device 112 at 570, the first safety data that is associated with the primary control device 112 can be synchronized with the second safety data associated with the secondary control device 122 at 580. Again, the first safety data and the second safety data can include various suitable types of safety data, such as input data, intermediate data, and output data associated with the safety function 134, for example. Also, the synchronization of the first safety data and the second safety data at 580 can again be performed using unique identifiers (e.g., identifiers derived from CIP object instance numbers as used in the safety function 134, etc.) and/or re-mapping of the memory 116 (e.g., updating one or more memory address mapping tables, etc.).

At 590, the process 500 can include restarting the execution of the control function and the safety function on the primary control device after synchronizing the first safety data with the second safety data. For example, after updating the primary control device 112 at 570 and synchronizing the first safety data with the second safety data at 570, the execution of the control function 132 and the safety function 134 can be restarted on the primary control device 112. The execution of the control function 132 and the safety function 134 on the primary control device 112 can be restarted at 590 in various suitable manners. For example, a user can initiate the restart via the user device 140 (e.g., by interacting with user interfaces presented by the user device 140 as a result of executing the user application 142) or the restart can happen automatically after the control system 100 determines that the first safety data and the second safety data are appropriately synchronized. After 590, the process 500 can loop back to 510, where the primary control device 112 and the secondary control device 122 can continuously execute the control function 132 and the safety function 134 during normal operation of the control system 100. After 560 and for 570, 580, and 590, the secondary control device 122 can be operating as the "new" primary device such that the primary control device 112 is technically the "old" primary device. Also, after 590, the primary control device 112 can operate as a "new" secondary device within the control system 100.

It should be noted that while the elements of the process 300, the process 400, and the process 500 are shown in a particular order in FIGS. 3-5, respectively, the process 300, the process 400, and the process 500 may not include all elements shown, may include additional elements, or may include the elements in a different order.

This description uses examples to disclose the invention and also to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method for facilitating updates in a control system, the method comprising:
executing a control function and a safety function associated with equipment in the control system concurrently on a primary control device and a secondary control device;
halting execution of the control function and the safety function on the secondary control device;
updating the secondary control device while the execution of the control function and the safety function is halted on the secondary control device;
synchronizing second safety data that is associated with the safety function and stored in memory of the secondary control device with first safety data that is associated with the safety function and stored in memory of the primary control device after updating the secondary control device;
restarting the execution of the control function and the safety function on the secondary control device after synchronizing the second safety data with the first safety data;
halting execution of the control function and the safety function on the primary control device after restarting the execution of the control function and the safety function on the secondary control device;
updating the primary control device while the execution of the control function and the safety function is halted on the primary control device;
synchronizing the first safety data with the second safety data after updating the primary control device; and
restarting the execution of the control function and the safety function on the primary control device after synchronizing the first safety data with the second safety data.

2. The method of claim 1, wherein the primary control device and the secondary control device are to operate together in accordance with a one out of two (1oo2) or a one out of two with diagnostics (1oo2d) safety architecture.

3. The method of claim 2, further comprising causing the secondary control device to operate as a new primary control device within the safety architecture after restarting the execution of the control function and the safety function on the secondary control device and before halting the execution of the control function and the safety function on the primary control device.

4. The method of one of claims 1 to 3, wherein:
updating the secondary control device comprises updating firmware stored in the memory of the secondary control device; and
updating the primary control device comprises updating firmware stored in the memory of the primary control device.

5. The method of one of claims 1 to 4, wherein:
updating the secondary control device comprises replacing the secondary control device with an updated secondary control device; and
updating the primary control device comprises replacing the primary control device with an updated primary control device.

6. The method of one of claims 1 to 5, wherein:
synchronizing the second safety data with the first safety data comprises re-mapping the memory of the secondary control device; and
synchronizing the first safety data with the second safety data comprises re-mapping the memory of the primary control device.

7. The method of one of claims 1 to 6, further comprising comparing a second output generated by the secondary control device as a result of executing the safety function to a first output generated by the primary control device as a result of executing the safety function after restarting the execution of the safety function on the secondary control device.

8. A control system comprising:
memory comprising machine-readable instructions; and
processing circuitry to execute the machine-readable instructions to:
execute a safety function associated with equipment in the control system concurrently on a primary control device and a secondary control device;
halt execution of the safety function on the secondary control device;
update the secondary control device while the execution of the safety function is halted on the secondary control device;
synchronize second safety data that is associated with the safety function and stored in memory of the secondary control device with first safety data that is associated with the safety function and stored in memory of the primary control device after updating the secondary control device;
restart the execution of the safety function on the secondary control device after synchronizing the second safety data with the first safety data;
halt execution of the safety function on the primary control device after restarting the execution of the safety function on the secondary control device;
update the primary control device while the execution of the safety function is halted on the primary control device;
synchronize the first safety data with the second safety data after updating the primary control device; and
restart the execution of the safety function on the primary control device after synchronizing the first safety data with the second safety data.

9. The control system of claim 8, wherein the primary control device and the secondary control device are to operate together in accordance with a one out of two (1oo2) or a one out of two with diagnostics (1oo2d) safety architecture.

10. The control system of claim 9, wherein the processing circuitry is to execute the machine-readable instructions to cause the secondary control device to operate as a new primary control device within the safety architecture after restarting the execution of the safety function on the secondary control device and before halting the execution of the safety function on the primary control device.

11. The control system of one of claims 8 to 10, wherein the processing circuitry is to execute the machine-readable instructions to:
update the secondary control device by updating firmware stored in the memory of the secondary control device, and update the primary control device by updating firmware stored in the memory of the primary control device; and/or
update the secondary control device by replacing the secondary control device with an updated secondary control device, and update the primary control device by replacing the primary control device with an updated primary control device.

12. The control system of one of claims 8 to 11, wherein the processing circuitry is to execute the machine-readable instructions to:
synchronize the second safety data with the first safety data by re-mapping the memory of the secondary control device; and
synchronize the first safety data with the second safety data by re-mapping the memory of the primary control device.

13. The control system of one of claims 8 to 12, wherein the processing circuitry is to execute the machine-readable instructions to compare a second output generated by the secondary control device as a result of executing the safety function to a first output generated by the primary control device as a result of executing the safety function after restarting the execution of the safety function on the secondary control device.

14. One or more non-transitory computer-readable storage media having instructions stored thereon that, when executed by processing circuitry, cause the processing circuitry to:
execute a safety function associated with equipment in the control system concurrently on a primary control device and a secondary control device;
halt execution of the safety function on the secondary control device;
update the secondary control device while the execution of the safety function is halted on the secondary control device;
synchronize second safety data that is associated with the safety function and stored in memory of the secondary control device with first safety data that is associated with the safety function and stored in memory of the primary control device after updating the secondary control device;
restart the execution of the safety function on the secondary control device after synchronizing the second safety data with the first safety data;
halt execution of the safety function on the primary control device after restarting the execution of the safety function on the secondary control device;
update the primary control device while the execution of the safety function is halted on the primary control device;
synchronize the first safety data with the second safety data after updating the primary control device; and
restart the execution of the safety function on the primary control device after synchronizing the first safety data with the second safety data.

15. The non-transitory computer-readable storage media of claim 14, arranged in accordance with any one or more of claims 9 to 13.
